# EUROPEAN PATENT APPLICATION

(11) **EP 4 420 963 A1**
(43) Date of publication of application: **28.08.2024**
(21) Application number: 24157454.0
(22) Date of filing: 13.02.2024
(51) Int. Cl.: B62D 55/14, B62D 55/12

(54) **TRACK TRANSMISSION FOR A WORK VEHICLE AND WORK VEHICLE COMPRISING THE SAME**

(30) Priority: 22.02.2023 IT 202300003021
(71) Applicant: CNH Industrial Italia S.p.A., 10156 Torino (IT)
(72) Inventor: LOPREVITE, Mauro, 10156 Turin (IT); RUSSO, Francesca, 10156 Turin (IT)
(74) Representative: CNH Industrial IP Department

(57) **Abstract**

Track transmission (10; 10') for a work vehicle (1), comprising a driving wheel (11) and one or more rollers (12, 13) which are rotatable relative to a main body (2) of the work vehicle (1) and a track chain (15) comprising interconnected links (16). The links (16) are adapted to mesh with the driving wheel (11) and the rollers so as to move the track chain (15) relative to the main body (2). The track transmission (10) further comprises piezoelectric devices (20; 20') adapted to be compressed between the driving wheel (11) and the links (16) cooperating therewith and/or between the rollers (12, 13) and the links (16) cooperating therewith.

## Description

### TECHNICAL FIELD

The present invention relates to a track transmission for a work vehicle. The present invention further relates to a work vehicle comprising a track transmission.

### BACKGROUND OF THE INNOVATION

Some known work vehicles or earth-moving machines, such as excavators, power shovels, cranes, and the like are provided with track transmissions. A track transmission generally includes a track chain adapted to cooperate with the ground and at least one driving wheel adapted to transmit power from a propulsion system of the vehicle to the track chain.

The work vehicles comprising track transmissions may be used on rough terrain and in harsh working conditions. However, it has been observed that such known work vehicles are not always efficient from an energy standpoint.

This is particularly relevant when the work vehicles operate in the above-mentioned harsh working conditions, where energy consumption and thus fuel consumption and pollutant emissions may be very high.

Therefore, there is a need within the industry for a device that allows energy to be recovered during the operation of the work vehicle, in order to increase the energy efficiency of the work vehicle.

### SUMMARY OF THE INVENTION

The aforementioned aim is reached by a track transmission for a work vehicle, as claimed in the appended independent claim.

Preferred embodiments of the invention are realized according to the claims dependent or related to the above independent claim.

### BRIEF DESCRIPTION OF DRAWINGS

For a better understanding of the present invention, one preferred embodiment is described in the following, by way of a non-limiting example, with reference to the attached drawing wherein:
- Figure 1 is a lateral view of a work vehicle comprising a track transmission according to a first embodiment the present invention and with parts removed for clarity;
- Figure 2 is a perspective view of a component of the track transmission of Figure 1;
- Figure 3 is a lateral view of the component of Figure 1;
- Figure 4 is a cross section along line IV-IV in Figure 3;
- Figure 5 is a perspective view of a portion of the track transmission of Figure 1 on an enlarged scale including the component of Figures 2, 3 and 4 and with parts removed for clarity;
- Figure 6 is a perspective cross-sectional view of a portion of the track transmission of Figure 1 on an enlarged scale including the component of Figures 2, 3 and 4 and with parts removed for clarity;
- Figure 7 is a perspective view of a portion of a work vehicle comprising a track transmission according to a second embodiment the present invention and with parts removed for clarity.

### DETAILED DESCRIPTION OF THE INVENTION

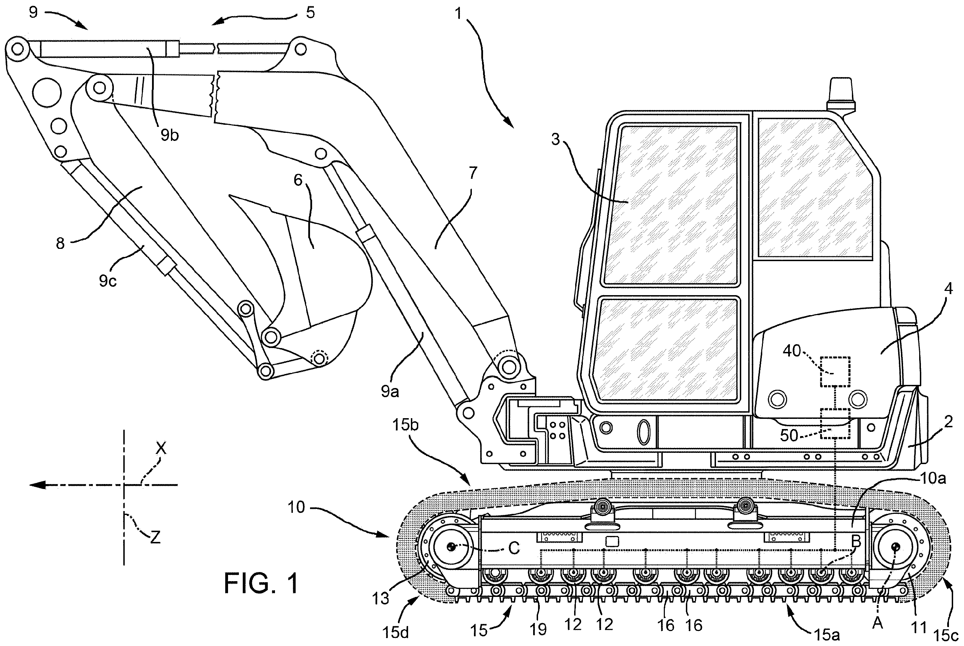

With reference to figure 1, numeral 1 indicates a work vehicle, in particular a hydraulic excavator.

Work vehicle 1 comprises:
- a main body 2 that preferably defines a cab 3 for a driver; and
- a housing 4 for a propulsion system (not shown) comprising a motor, in particular an internal combustion engine and/or an electrical motor.

Work vehicle 1 further comprises an articulated mechanism 5 for maneuvering an end-effector 6, such as a tool for excavating as illustrated in Figure 1; more precisely, the tool is an excavator bucket.

The articulated mechanism 5 is carried by main body 2 at a front portion thereof next to cab 3.

The articulated mechanism 5 specifically comprises a first boom 7 hinged at one end to main body 2 and a second arm 8 hinged at the other end of the first boom 7; the second arm 8 carries the end-effector 6 at an end opposite to that hinged to the first boom 7.

The articulated mechanism 5 is actuated through a hydraulic assembly 9, which comprises in detail three hydraulic actuators 9a, 9b, 9c. The three hydraulic actuators 9a, 9b, 9c are respectively coupled to the first boom 7, the second arm 8, and the end-effector 6 for their angular displacement. In detail, hydraulic actuator 9a is adapted to allow angular displacement of first boom 7 relative to main body 2; hydraulic actuator 9b is adapted to allow angular displacement of second arm 8 relative to first boom 7; hydraulic actuator 9c is adapted to allow angular displacement of end-effector 6 relative to second arm 8.

Work vehicle 1 comprises, in addition, one or more electrically-powered devices 40 and an electrical system 50 for powering the electrically-powered devices 40, which are only schematically shown in Figure 1. By way of example, electrically-powered devices 40 include internal or external lights of work vehicle 1.

Work vehicle 1 further comprises a track transmission 10 that is operatively connected to main body 2 and adapted to carry the latter along an advancing direction of work vehicle 1. In other words, track transmission 10 has the function of driving work vehicle 1 on the ground according to the advancing direction. In detail, track transmission 10 is arranged below main body 2 according to a direction Z orthogonal to the ground.

The track transmission 10 comprises:
- a driving wheel 11;
- an idler wheel 13;
- an undercarriage frame 10a, which supports driving wheel 11 and idler wheel 13 and which is operatively connected to main body 2; and
- a track chain 15 that meshes with both driving wheel 11 and idler wheel 13 to form a closed loop partially wound around driving wheel 11 and idler wheel 13.

Both the driving wheel 11 and idler wheel 13 are rotatable relative to main body 2 and undercarriage frame 10a about respective axes A, C that are parallel to each other and spaced from each other according to a longitudinal direction X of work vehicle 1. The driving wheel 11 is operatively connected to the propulsion system of work vehicle 1 to receive power therefrom and accordingly move the track chain 15.

The distance between axes A and C is such that the meshing track chain 15 is sufficiently tensioned to move work vehicle 1 with respect to the ground. In particular, the idler wheel 13 is a front wheel and driving wheel 11 is a rear wheel, according to the advancing direction of work vehicle 1.

Track transmission 10 further comprises a plurality of rollers 12 meshing with track chain 15. Rollers 12 are rotatable about respective axes B and interposed between idler wheel 13 and driving wheel 11 along longitudinal direction X. In detail, axes B are parallel to one another and to axes A and C (Figure 1).

Preferably, rollers 12 are idler rollers rotatably supported by undercarriage frame 10a. In addition, rollers 12 are opposite to main body 2 with respect to a barycenter of undercarriage frame 10a along direction Z.

In the embodiment shown, track transmission 10 comprises eleven rollers 12 identical to one another. In addition, preferably, the diameter of rollers 12 is smaller than the diameter of driving wheel 11 and idler wheel 13.

As shown in Figure 1, track chain 15 comprises a plurality of interconnected links 16, each configured to mesh with driving wheel 11, rollers 12 and idler wheel 13.

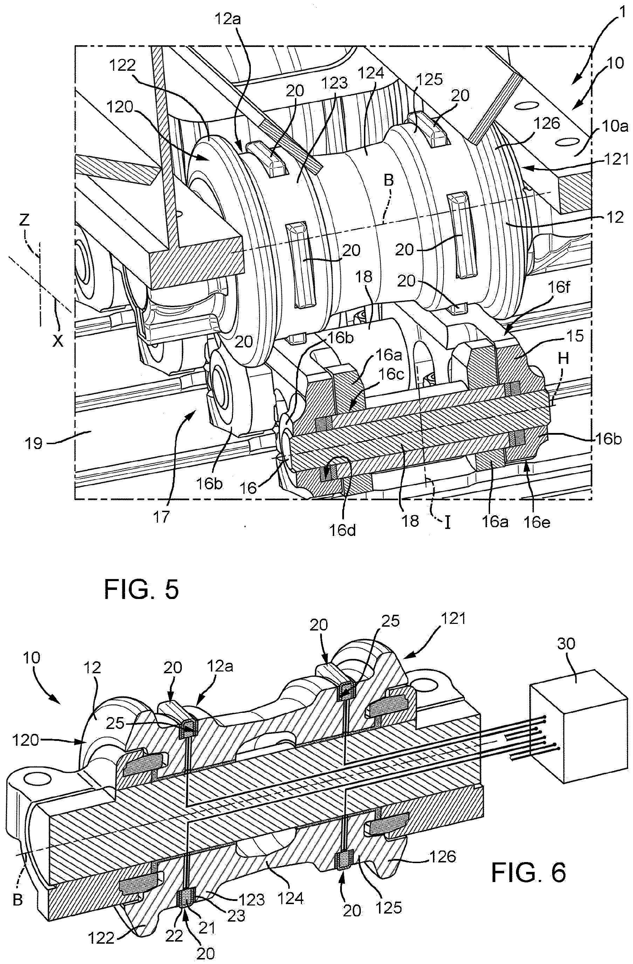

Each of the links 16 has a first end 16a and a second end 16b, which is opposite to the respective first end 16a. The first end 16a and the second end 16b of each link 16 are respectively hinged about corresponding hinge axes H to the second end 16b and to the first end 16a of two other adjacent links 16, in particular by means of respective pivot pins 18 extending along the hinge axes H (Figure 5).

More precisely, the relative adjacent ends 16a, 16b of two links 16 of track chain 15 comprise respective through holes 16c, 16d that are aligned to each other along one of the axes H, such that one of the pivot pins 18 is inserted through the matching holes 16c, 16d and the two links 16 are hinged to each other.

Figure 5 illustrates a specific form of links 16 that is known in the art and thus not described in detail; however, the illustrated form may be replaced by any other form known in the art. Whatever the form of the links 16, each of them defines an inner side of the closed loop, which faces undercarriage frame 10a, and an outer side of the closed loop, which is opposite to the inner side.

For each link 16 of the track chain 15, track transmission 10 comprises a corresponding shoe 19 coupled to the link 16 in a fixed manner at the outer side of the closed loop. The shoe 19 is adapted to contact the ground during the movement of work vehicle 1.

More specifically, each link 16 comprises a surface 16e, which contacts the relative shoe 19 and a surface 16f, which is opposite to surface 16e along a direction I orthogonal to the respective axis H and adapted to face the roller 12 meshing with the link 16 (Figure 5).

Preferably, surface 16f is planar and orthogonal to direction I.

As shown in Figure 1, track chain 15 comprises:
- a portion 15a, which comprises the links 16 adapted to cooperate with the ground through shoes 19; in detail, portion 15a is arranged below the barycenter of undercarriage frame 10a along direction Z;
- a portion 15b, which is opposite to portion 15a along direction Z;
- a portion 15c, which is interposed between portion 15a and portion 15b along direction Z and adapted to be wound around driving wheel 11; and
- a portion 15d, which is interposed between portion 15b and portion 15a along direction Z and adapted to be wound around idler wheel 13.

Portions 15a, 15b, 15c and 15d define the closed loop of track chain 15.

In detail, rollers 12 are adapted to mesh with the links 16 of portion 15a. Accordingly, rollers 12 are road rollers which transmit the weight of the rest of vehicle 1 to the ground.

In the following of the present description, reference will be made to a single roller 12, being all rollers 12 identical to one another.

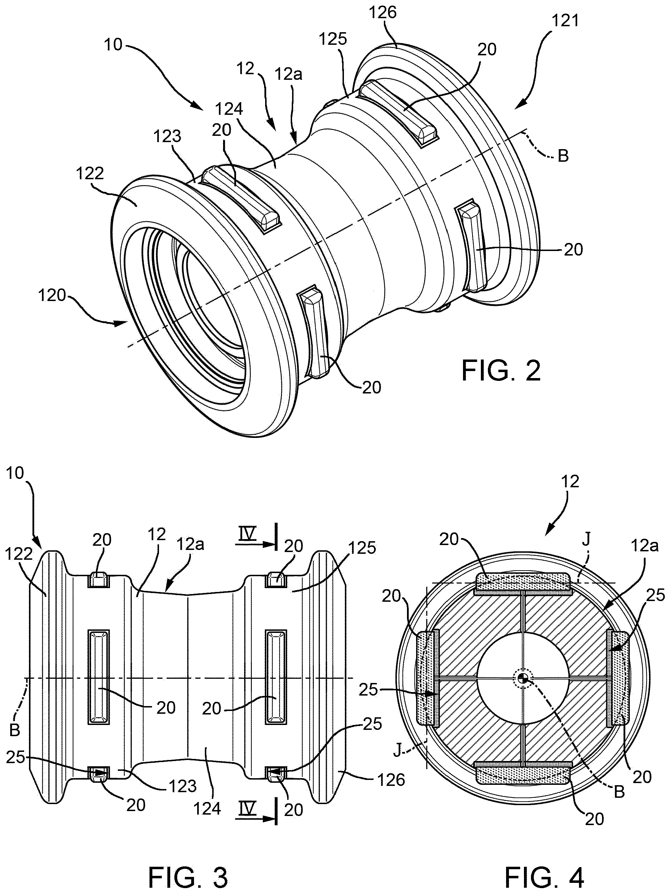

In detail, roller 12 is a cylindrical body comprising two opposite axial ends 120, 121 along rotational axis B. In the embodiment shown, proceeding along rotational axis B, roller 12 comprises (Figures 2 to 5):
- a first stretch 122 at axial end 120, which preferably has the maximum diameter of the roller 12;
- a second stretch 123, which is adapted to face a first region of surface 16f of the respective link 16 meshing with roller 12;
- a third stretch 124, which preferably has the minimum diameter of the roller 12;
- a fourth stretch 125, which is adapted to face a second region of surface 16f of the respective link 16 meshing with roller 12; and
- a fifth stretch 126 at axial end 121, which preferably has the same diameter as first stretch 122.

Advantageously, track transmission 10 further comprises a plurality of piezoelectric devices 20, which are adapted to be compressed between rollers 12 and the links 16 meshing therewith.

Each roller 12 is provided with one or more piezoelectric devices 20 mounted on it. Alternatively, only some of rollers 12 are provided with piezoelectric devices 20.

As shown in Figure 5, each roller 12 comprises a radially outer surface 12a, at which the piezoelectric devices 20 are arranged. In detail, piezoelectric devices 20 are adapted to roll on surface 16f of the respective link 16 meshing with the roller 12. In further detail, some piezoelectric devices 20 are arranged at second stretch 123 and some other piezoelectric devices 20 are arranged at fourth stretch 125.

In the embodiment shown in Figures 2 to 6, four piezoelectric devices 20 are mounted at second stretch 123 and four piezoelectric devices 20 are mounted at fourth stretch 125. More specifically, the four piezoelectric devices 20 at second stretch 123 are angularly equispaced from one another about rotational axis B; the same applies to the four piezoelectric devices 20 at fourth stretch 125.

More specifically, each roller 12 comprises a plurality of recesses 25 at the respective radially outer surface 12a, which house respective piezoelectric devices 20. Recesses 25 have a shape corresponding to the shape of piezoelectric devices.

Each roller 12 comprises four recesses 25 at second stretch 123 and four recesses 25 at fourth stretch 125. In addition, each piezoelectric device 20 is partially housed in a respective recess 25 and partially protrudes from the respective recess 25 and the relative radially outer surface 12a.

In the following of the present description, reference will be made to a single piezoelectric device 20, being all piezoelectric devices 20 identical to one another.

Piezoelectric device 20 comprises a core 21 made of a piezoelectric material, i.e., a material that is adapted to generate an electric charge in response to an applied mechanical stress, and a case 22 for covering core 21 (Figure 6). The case 22 is configured to contact the links 16, in particular at respective surfaces 16f, and is adapted to transmit to core 21 the mechanical stress to which it is subjected.

Piezoelectric device 20 further comprises a gasket 23, which is adapted to seal core 21 and case 22 with respect to the roller 12 to which the piezoelectric device 20 is attached. In detail, gasket 23 is interposed between case 22 and the respective recess 25 (Figure 6).

In the embodiment shown in Figures 2 to 6, piezoelectric device 20 has a parallelepiped shape and extends along an angular sector of the roller 12 to which it is attached. In greater detail, as shown in Figure 4, the piezoelectric devices 20 mounted on each roller 12 are arranged in such a manner that their respective longitudinal axes J are tangential to a circumference centered with respect to rotational axis B.

Piezoelectric devices 20 are electrically connected to electrical system 50. Accordingly, the electrical energy generated as a result of the compression of piezoelectric devices 20 may be used to power electrically-powered devices 40.

In detail, track transmission 10 comprises a plurality of rotary electrical joints 30, only one of which is schematically shown in Figure 6. Rotary electrical joints 30 are adapted to electrically connect piezoelectric devices 20 of each roller 12 to electrical system 50 even during rotation of rollers 12. Preferably, track transmission 10 comprises a rotary electrical joint 30 for each roller 12.

The operation of track transmission 10 and work vehicle 1 according to the present invention is described in the following.

In use, track transmission 10 moves work vehicle 1 with respect to the ground. In detail, driving wheel 11 receives power for the propulsion system of work vehicle 1 and moves accordingly track chain 15 and shoes 19 attached thereto.

During the movement of track chain 15 with respect to main body 2 and undercarriage frame 10a, the links 16 mesh cyclically with driving wheel 11, idler wheel 13 and rollers 12 and cyclically follow one another along portion 15a, portion 15b, portion 15c and portion 15d. Simultaneously, rollers 12 rotate about respective rotational axes B and piezoelectric devices 20 mounted on them cyclically contact surfaces 16f of the links 16 meshing with them.

Every time a piezoelectric device 20 contacts the relative contact surface 16f, it is compressed between the relative roller 12 and the links 16 cooperating therewith. The compression of the piezoelectric device 20 is transmitted by the respective case 22 to the respective core 21, which generates electrical energy in response to the applied mechanical stress.

The electrical energy generated by the piezoelectric devices is then collected by rotary electrical joints 30 and delivered to electrical system 50. The electrical energy can thus be used to power electrically-powered devices 40.

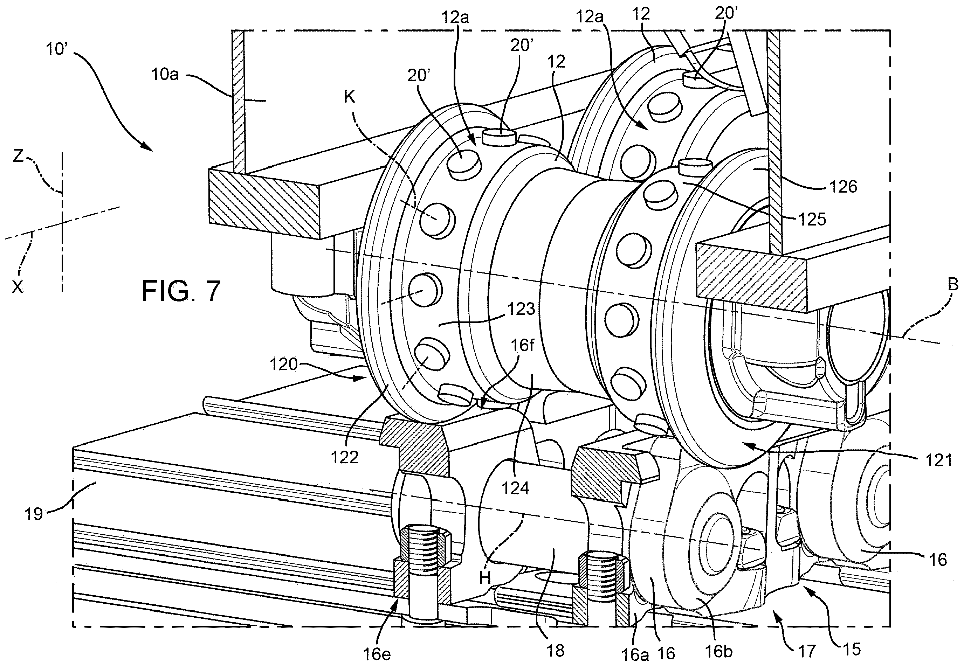

With reference to Figure 7, 10' denotes a track transmission according to a second embodiment of the present invention. Track transmission 10' is similar to track transmission 10 and will be described hereinafter only insofar as it differs from the latter; equal or equivalent parts of track transmissions 10; 10' will be marked, where possible, by the same reference numerals.

Track transmission 10' differs from track transmission 10 in that it comprises piezoelectric devices 20' shaped like a cylinder and having respective longitudinal axes K arranged radially to rotational axis B of the respective roller. In particular, piezoelectric devices 20' are shaped like buttons.

Similarly to piezoelectric devices 20 of track transmission 10, the piezoelectric devices 20' mounted on a roller 12 are angularly spaced from one another with respect to the relative rotational axis B. In detail, piezoelectric devices 20' are arranged both at second stretch 123 and fourth stretch 125 of the respective roller 12. In the embodiment shown in Figure 7, six piezoelectric devices 20' are mounted at second stretch 123 of each roller 12 and six piezoelectric devices 20' are mounted at fourth stretch 125 of each roller 12.

The operation of track transmission 10' is analogous to the operation of track transmission 10 and the description thereof is omitted for the sake of conciseness.

In view of the foregoing, the advantages of track transmission 10; 10' and work vehicle 1 according to the invention are apparent.

In particular, since track transmission 10; 10' comprises piezoelectric devices 20; 20', which are compressed between rollers 12 and the links 16 meshing with them in view of the weight of the rest of work vehicle 1, electrical energy is generated that may be used to power electrically-powered devices 40. As a result, track transmission 10; 10' allows energy to be efficiently recovered during the operation of work vehicle 1.

Since each piezoelectric device 20; 20' comprises a case 22, core 21 is shielded from external environment. Moreover, gasket 23 prevents mud and water from reaching core 21 and affecting its functioning.

Since track transmission 10; 10' comprises rotary electrical joints 30, piezoelectric devices 20; 20' are effectively electrically connected to electric system 50 even during rotation of rollers 12.

It is clear that modifications can be made to track transmission 10; 10' and work vehicle 1 which do not extend beyond the scope of protection defined by the claims.

Track transmission 10; 10' might comprise one or more piezoelectric devices 20; 20' adapted to be compressed between driving wheel 11 and the links 16 cooperating therewith and/or between idler wheel 13 and the links 16 cooperating therewith.

## Claims

1. Track transmission (10; 10') for a work vehicle (1), comprising:
- a driving wheel (11), which is rotatable about a first rotational axis (A) relative to a main body (2) of said work vehicle (1);
- at least one roller (12, 13), which is rotatable about a second rotational axis (B, C) relative to said main body (2); and
- a track chain (15) comprising a plurality of interconnected links (16);
at least some of said links (16) being adapted to mesh, in use, with said driving wheel (11) and said at least one roller (12, 13) so as to move, in use, said track chain (15) relative to said main body (2);
wherein said track transmission (10; 10') further comprises at least one piezoelectric device (20; 20'), which is adapted to be compressed, in use, between said driving wheel (11) and the links (16) meshing therewith and/or between said at least one roller (12, 13) and the links (16) meshing therewith.

2. Track transmission according to claim 1, wherein said track chain (15) comprises a contact portion (15a); said contact portion (15a) comprising a plurality of said links (16) adapted to cooperate, in use, with the ground;
said track transmission (10; 10') comprising a plurality of said rollers (12), which are adapted to mesh, in use, with the links (16) of said contact portion (15a);
wherein said piezoelectric devices (20; 20') are mounted on at least some of said rollers (12).

3. Track transmission according to claim 2, wherein said rollers (12) comprise a radially outer surface (12a), which is adapted to cooperate, in use, with said links (16);
wherein said piezoelectric devices (20; 20') are mounted at said relative radially outer surface (12a).

4. Track transmission according to claim 3, wherein each said piezoelectric device (20; 20') comprises a core (21) made of a piezoelectric material and a case (22) for covering said core (21);
said case (22) being adapted to contact, in use, said links (16) of said contact portion (15a).

5. Track transmission according to claim 4, wherein each said piezoelectric device (20; 20') further comprises a gasket (23) for sealing said core (21) and said case (22) with respect to the roller (12) to which the piezoelectric device (20; 20') is attached.

6. Track transmission according to claim 2 to 5, wherein each said piezoelectric device (20) has a parallelepiped shape and extends along an angular sector of the roller (12) to which it is attached;
said roller (12) having a plurality of said piezoelectric devices (20) mounted on it; said piezoelectric devices (20) being angularly spaced from one another with respect to said relative second axis (B).

7. Track transmission according to claim 3 to 5, wherein said piezoelectric device (20') is shaped like a cylinder and the longitudinal axis (J) of said cylinder is arranged radially to the second axis (B) of the roller (12) to which said piezoelectric device (20') is attached;
said roller (12) having a plurality of said piezoelectric devices (20') mounted on it; said piezoelectric devices (20') being angularly spaced from one another with respect to said relative second axis (B).

8. Work vehicle (1) comprising:
- a main body (2);
- a track transmission (10; 10') according to any one of the foregoing claims; said track transmission (10; 10') being adapted to move said main body (2) with respect to the ground;
- a propulsion system adapted to drive said driving wheel (11) of said track transmission (10; 10') in rotation;
- one or more electrically-powered devices (40); and
- an electrical system (50) for powering said electrically-powered devices (40);
wherein said at least one piezoelectric device (20; 20') of said track transmission (10; 10') is electrically connected to said electrical system (50).

9. Work vehicle according to claim 8, wherein said track transmission (10; 10') comprises a rotary electrical joint (30), which is adapted to electrically connect said at least one piezoelectric device (20; 20') to said electrical system (50) .
